# EUROPÄISCHE PATENTSCHRIFT

(11) **EP 1 493 961 B1**
(45) Veröffentlichungstag und Bekanntmachung des Hinweises auf die Patenterteilung: **28.11.2007**
(21) Anmeldenummer: 04014905.6
(22) Anmeldetag: 25.06.2004
(51) Int. Cl.: F17C 1/08, B60K 15/03

(54) **Druckgastank**
Pressurised gas tank
Réservoir pur gaz sous pression

(30) Priorität: 02.07.2003 DE 10329990
(43) Veröffentlichungstag der Anmeldung: 05.01.2005
(73) Patentinhaber: Benteler Automobiltechnik GmbH, 33104 Paderborn (DE)
(72) Erfinder: Austerhoff, Norbert, 33098 Paderborn (DE); Bendler, Jens, 33102 Paderborn (DE); Perske, Joachim, 33154 Salzkotten (DE); Peters, Rafael, 59556 Lippstadt (DE)
(74) Vertreter: Ksoll, Peter

(56) Entgegenhaltungen:
- EP-B- 0 068 473
- WO-A-00/58662
- BE-A- 442 554
- DE-A- 2 931 947
- DE-A- 19 749 950
- DE-C- 711 117

## Beschreibung

Die Erfindung betrifft einen Druckgastank für ein Kraftfahrzeug.

In der Kraftfahrzeugtechnik laufen bereits seit langem Entwicklungen, um anstelle der heute überwiegend eingesetzten flüssigen Kraftstoffe, wie Benzin oder Dieselkraftstoff, gasförmige Treibstoffe zu verwenden. Hierbei stehen die Verwendung von Wasserstoff und Erdgas im Vordergrund, insbesondere aus ökologischen Gründen, weil Fahrzeuge mit gasförmigen Treibstoffen schadstoffarm betrieben werden können.

Um die Reichweite von gasbetriebenen Kraftfahrzeugen in einer ausreichenden Größenordnung zu gewährleisten, muss das Gas auf einen relativ hohen Druck verdichtet werden, um in einem in der Praxis zur Verfügung stehenden Bauraum in einem Kraftfahrzeug untergebracht werden zu können. In Kraftfahrzeugen ist jedoch der zur Verfügung stehende Bauraum für Druckgastanks sehr begrenzt. Konventionelle Druckgasflaschen nutzen das zur Verfügung stehende Bauraumvolumen sehr schlecht aus, d.h. es kann nur eine sehr geringe Menge Druckgas mitgeführt werden. Dies lässt entsprechend nur eine geringe Reichweite eines Kraftfahrzeugs zu.

Üblicherweise bestehen Behälter für Druckgase aus Stahl. Aus Festigkeitsgründen werden dabei entweder Kugelformen oder Zylinderformen mit kugelig ausgebildeten Stirnflächen bevorzugt. Um das Gewicht eines Behälters möglichst gering zu halten, ist man bestrebt, die Wanddicken des Gasbehälters möglichst dünn auszuführen. Mit den heute üblichen Fügetechniken ist die Dichtigkeit eines solchen Gasbehälters ohne weiteres zu gewährleisten. Allerdings besteht das Problem, dass man bei den herrschenden hohen Behälterinnendrücken an die Grenze der zulässigen Festigkeit des Gasbehälters stößt.

Ein Druckgastank nach dem Oberbegriff des Ansprunch 1 ist beispielsweise aus der BE 442 554 A bekannt. Bei die Druckgastank weisen gegenüberliegende Behälterwände eines metallischen Gasbehälters eine ihre Steifigkeit erhöhende Profilierung auf und sind durch mehrere den Gasbehälter durchsetzende Zugelemente verbunden. Die Zugelemente sind an ihren Enden mit Ankerköpfen versehen, die in Öffnungen der Behälterwände gasdicht mit den Behälterwänden gefügt sind.

Aus der WO 00/58662 A1 geht ein Druckgastank hervor, bei dem die einander gegenüberliegenden Behälterwände eine ihre Steifigkeit erhöhende Profilierung aufweisen und durch den Gasbehälter durchsetzende Zugelemente verbunden sind. Die Profilierung der Behälterwände wird durch eine Vielzahl rund bzw. kugelabschnittsförmig gestalteter Wandabschnitte gebildet. Die Zugelemente sind stangenförmig ausgebildet mit entsprechend der Kontur der Behälterwände angepassten äußeren Ankerköpfen.

Der Erfindung liegt ausgehend vom Stand der Technik die Aufgabe zu Grunde, einen Druckgastank für Kraftfahrzeuge zu schaffen, der im Hinblick auf seine Formgebung einen größeren Gestaltungsspielraum ermöglicht, um den in einem Kraftfahrzeug jeweils zur Verfügung stehenden Bauraum besser ausnutzen zu können, der die Sicherheitsanforderungen an den Gasbehälter zuverlässig einhält sowie rationell und wirtschaftlich zu fertigen ist.

Die Lösung dieser Aufgabe besteht nach der Erfindung in einem Druckgastank gemäß den Merkmalen von Patentanspruch 1.

Der erfindungsgemäße Druckgastank besitzt einen Gasbehälter aus Metall, bei welchem die einander gegenüberliegenden Behälterwände eine Profilierung aufweisen, durch die deren Steifigkeit erhöht wird und bei dem die Behälterwände durch wenigstens ein den Gasbehälter durchsetzendes Zugelement miteinander verbunden sind. Erfindungsgemäß weist der verdickte Ankerkopf zumindest an einem Ende eines Zugelements einen inneren Anschlag und einen äußeren durch Umformen eines Zapfens gebildeten Radialkragen auf, zwischen denen die Behälterwand in einer Ringnut gehalten ist. Die in den Behälterwänden einander gegenüberliegenden Öffnungen, in denen das Zugelement festgelegt wird, sind unterschiedlich groß.

Dieses Baukonzept lässt eine rationelle und wirtschaftliche Herstellung in einem Serienprozess zu. Hierbei werden zunächst die Oberschale und die Unterschale in einem Pressenwerkzeug gefertigt. Anschließend werden die Öffnungen für die Durchführung der Zugelemente eingebracht. Beim Zusammenbau des Gasbehälters wird zunächst die Unterschale mit den Zugelementen bestückt. Anschließend kann die Oberschale aufgesetzt werden. Die beiden Schalen werden dann durch eine Umlaufnaht miteinander verschweißt. Zuletzt werden die Zugelemente mit Ober- und Unterschale derart verbunden, dass die im betrieblichen Einsatz infolge des wirkenden Innendrucks auftretenden Zugkräfte zuverlässig mit ausreichendem Sicherheitsfaktor abgefangen werden können. Es kommt ein Zugelement zum Einsatz, welches stabförmig nach Art eines Nagels an einem Ende mit einem verdickten Ankerkopf versehen ist. Am anderen Ende weist das Zugelement einen radial ausgeformten umlaufenden Kragen als Anschlag und einen sich in axialer Richtung fortsetzenden Zapfen auf. Dieses Zugelement wird durch die größere Öffnung in einer Schale, beispielsweise der Unterschale, geführt, bis es mit dem Ankerkopf dort außen an der Behälterwand zur Anlage gelangt. Der Ankerkopf wird dann mit der Behälterwand gefügt. Die Oberschale liegt mit ihrer Innenseite auf dem Anschlag an dieser Seite auf. Hierbei ragt der Zapfen durch die korrespondierende Öffnung in der Oberschale. Der Zapfen wird dann erwärmt und radial zum Ankerkopf, ähnlich eines Niets, umgeformt. Anschließend werden diese Ankerköpfe der Zugelemente mit den Behälterwänden dicht geschweißt.

Der Gasbehälter ist in seiner Struktur so profiliert, dass er dem hohen Innendruck zuverlässig standhält. Zusätzlich wird der Innendruck durch innere Zugelemente abgefangen. Diese Ausgestaltung ermöglicht eine flexible Formgebung des Gasbehälters. Demzufolge kann der zur Verfügung stehende Bauraum in einem Kraftfahrzeug optimal ausgenutzt werden, und zwar unter Gewährleistung der an den Gasbehälter zu stellenden hohen Sicherheitskriterien.

Weitere Anschlüsse und Öffnungen im Gasbehälter, beispielsweise Öffnungen für das Befüllen bzw. die Entnahme von Gas oder den Anschluss von Sicherheitsventilen und Sensoren, werden im Fertigungsprozeß entsprechend integriert.

Als besonders vorteilhaft wird gemäß den Merkmalen von Patentanspruch 2 angesehen, dass die Profilierung der Behälterwände durch eine Vielzahl von aus der Ebene der Behälterwände geprägten konvex oder konkav gestalteten Wandabschnitten ausgebildet ist. Hierdurch wird die Struktur der Behälterwände kugelförmig, d.h. der Radius der einzelnen Wandabschnitte bildet eine Kugelform ab.

Zweckmäßigerweise besitzen die Behälterwände eine kissenartige Profilierung, wobei der Gasbehälter durch eine den jeweiligen Festigkeitsanforderungen angepasste Anzahl von inneren Zugelementen ausgesteift ist.

Grundsätzlich kann der Gasbehälter einstückig aus Metallblech gefertigt werden. Eine für die Praxis besonders vorteilhafte Ausführung wird jedoch nach den Merkmalen von Patentanspruch 3 darin gesehen, dass der Gasbehälter aus einer Oberschale und einer Unterschale besteht, welche über ihre umlaufenden Ränder verbunden sind. Idealerweise stoßen die Ränder stumpf aufeinander und werden schweißtechnisch gefügt. Selbstverständlich können sich die Ränder von Oberschale und Unterschale auch überlappen. Eine solche Schalenbauweise aus Metallblech ist rationell, kostengünstig und hinsichtlich des Gewichtes leicht bauend.

Die für die thermische Umformung der Ankerköpfe erforderliche Erwärmung erfolgt vorzugsweise auf induktivem Wege. Die induktive Erwärmung ist im Fertigungsprozeß besonders rationell und vollautomatisch gesteuert zu integrieren.

Gegebenenfalls kann das Zugelement unter Eingliederung einer Dichtung mit den Behälterwänden gefügt werden (Patentanspruch 4). Die Dichtung ist entsprechend auf die Warmumformung des Ankerkopfs angepasst. Möglich ist der Einsatz einer wärmebeständigen metallischen Dichtung. Auch die Verwendung einer Schmelzdichtung in Form eines Lots auf metallischer Basis bietet sich für die Praxis an. Bei einer Schmelzdichtung werden neben dem Formschluss zusätzlich Adhäsionskräfte für die Festlegung der Zugelemente genutzt.

Wie bereits erwähnt, kann das Zugelement unterschiedlich gestaltet sein, wobei eine stabförmige Ausführung als besonders vorteilhaft und praktikabel angesehen wird. In speziellen Anwendungsfällen kann ein Zugelement auch aus zwei miteinander koppelbaren Längenabschnitten bestehen. Für die Koppelung bietet sich eine Gewindeverschraubung der Längenabschnitte eines als Zuganker gestalteten Zugelements an. Denkbar ist auch eine kraft- und oder formschlüssige Rastverbindung zwischen den beiden Längenabschnitten.

Die Erfindung ist nachfolgend anhand von Ausführungsbeispielen näher beschrieben. Es zeigen:
- Figur 1: in einer perspektivischen Ansicht eine erste Ausführungsform eines erfindungsgemäßen Druckgastanks;
- Figur 2: einen Schnitt durch den Druckgastank gemäß der Figur 1;
- Figur 3: ebenfalls in einer perspektivischen Ansicht einen anderen Druckgastank ;
- Figur 4: einen Schnitt durch den Druckgastank gemäß der Figur 3;
- Figur 5: ein Zugelement in der Seitenansicht;
- Figur 6 a - c: jeweils einen Ausschnitt aus der Behälterwand eines Gasbehälters mit der Darstellung von drei verschiedenen Verbindungen zwischen Oberschale und Unterschale und
- Figur 7: eine weitere Ausführungsform eines Zugelements.

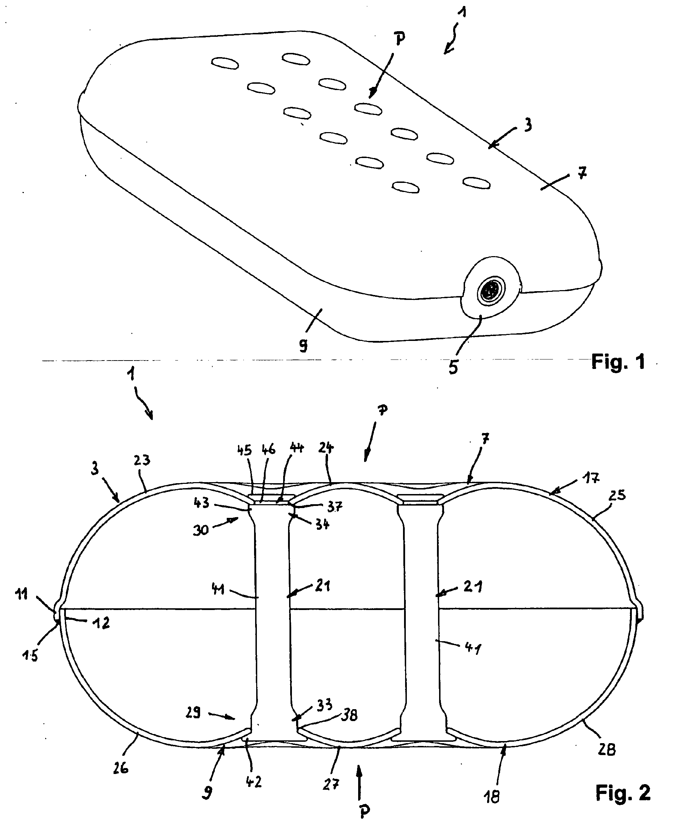

In den Figuren 1 bis 4 ist mit 1 bzw. 2 jeweils ein Druckgastank für ein Kraftfahrzeug bezeichnet. Jeder Druckgastank 1, 2 besitzt einen metallischen Gasbehälter 3, 4 mit einem Anschluß 5, 6 für die Befüllung bzw. Entnahme von Druckgas.

In den hier dargestellten Ausführungsbeispielen besitzen die Gasbehälter 3, 4 eine langgestreckte, rechteckige Konfiguration mit allseits gerundeten Seitenbereichen. Grundsätzlich können die Gasbehälter 3, 4 eine nahezu beliebige Form besitzen, die auf den jeweils in einem Kraftfahrzeug zur Verfügung stehenden Bauraum zugeschnitten ist. Demzufolge kann der zur Verfügung stehende Bauraum für den Gasbehälter 3, 4 optimal ausgenutzt werden.

Jeder Gasbehälter 3, 4 besteht aus einer Oberschale 7, 8 und einer Unterschale 9, 10, welche über ihre umlaufenden Ränder 11, 12 bzw. 13, 14 verbunden sind.

Wie anhand der Figur 2 zu erkennen ist, überlappt die Oberschale 7 die Unterschale 9 mit ihrem seitlich um die Stärke der Behälterwand der Unterschale 9 ausgestellten umlaufenden Rand 11. Durch eine durchgehende Schweißnaht 15 sind die Oberschale 7 und die Unterschale 9 vom Gasbehälter 3 miteinander gefügt.

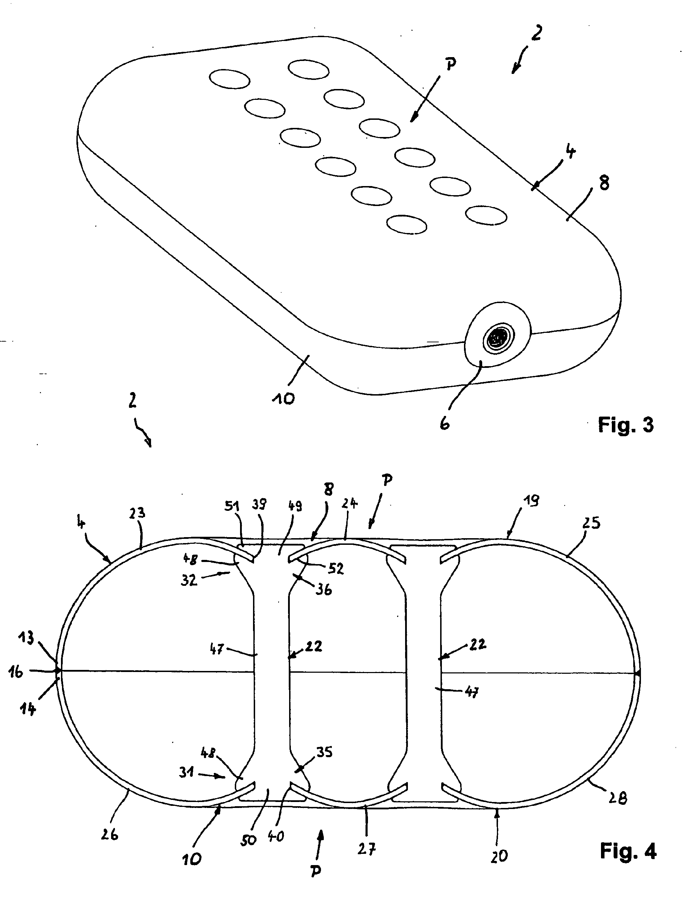

Wie in der Figur 4 ersichtlich, stoßen die Oberschale 8 und die Unterschale 10 des Gasbehälters 2 mit ihren Rändern 13, 14 stumpf aufeinander und sind dort ebenfalls durch eine umlaufende Schweißnaht 16 gasdicht gefügt.

Bei den Gasbehältern 3 bzw. 4 weisen einander gegenüberliegende Behälterwände 17, 18 bzw. 19, 20 eine ihre Steifigkeit erhöhende Profilierung P auf. Ferner sind die Behälterwände 17, 18; 19, 20 durch eine Anzahl von den Gasbehälter 3, 4 quer durchsetzenden inneren Zugelementen 21, 22 verbunden.

Die Profilierung P gibt den Gasbehältern 3, 4 eine kissen- oder matratzenartige Struktur. Die Profilierung P ist durch eine Vielzahl von aus der Ebene der Behälterwände 17, 18 bzw. 19, 20 geprägten konvex bzw. konkav gestalteten Wandabschnitten 23, 24, 25, 26, 27, 28 ausgebildet. Die Wandabschnitte 23-28 sind räumlich kugelförmig gekrümmt bzw. nähern sich der Kugelform an. Demzufolge ist die Struktur der Gasbehälter 3, 4 in den Wandabschnitten 23-28 auf die für die Aufnahme von hoch verdichtetem Druckgas idealen Kugelform oder Zylinderform angenähert.

Der Innendruck wird zusätzlich durch die in den Gasbehältern 3, 4 eingebrachten Zugelemente 21, 22 abgefangen. Die Zugelemente 21, 22 weisen an ihren Enden 29, 30 bzw. 31, 32 Ankerköpfe 33, 34 bzw. 35, 36 auf, die in Öffnungen 37, 38; 39, 40 der Behälterwände 17, 18; 19, 20 gasdicht mit den Behälterwänden 17, 18; 19, 20 gefügt sind.

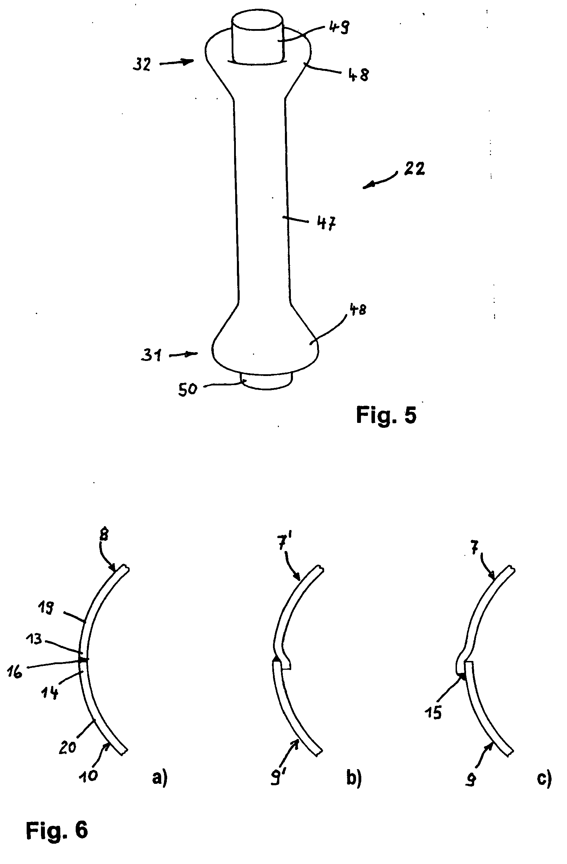

Bei dem Gasbehälter 3 gemäß der Figuren 1 und 2 weist das Zugelement 21 einen Zugstab 41 auf, an dessen einem Ende 29 ein gegenüber dem Zugstab 41 verdickter Ankerkopf 33 vorgesehen ist. Endseitig besitzt der Ankerkopf einen Anschlag 42 in Form eines radial umlaufenden Kragens. Der am anderen Ende 30 des Zugstabs 41 vorgesehene Ankerkopf 34 ist mit einem ebenfalls radial umlaufenden inneren Anschlag 43 versehen, an den sich im Ausgangszustand axial ein Zapfen 44 anschließt. Zum besseren Verständnis wird hierzu auch auf Figur 5 und die zugehörige Beschreibung verwiesen.

Die Öffnungen 38 in der Unterschale 9 sind im Durchmesser größer gestaltet als die Öffnungen 37 in der Oberschale 7. Die Durchmesser der Öffnungen 38 in der Unterschale 9 sind so groß, dass die Zugelemente 21 mit den Anschlägen 43 bei der Montage durch diese hindurchgeführt werden können, und zwar bis der Anschlag 42 am Ankerkopf 33 die Behälterwand 18 außenseitig kontaktiert. Anschließend wird die Oberschale 7 aufgesetzt. Die Behälterwand 17 der Oberschale 7 liegt dann auf den Anschlägen 43 auf. Die Zapfen 44 ragen durch die Öffnungen 37 in der Oberschale 7. Die Unterschale 9 und die Oberschale 7 werden dann umlaufend miteinander verschweißt.

Anschließend werden die Zapfen 44 vorzugsweise induktiv erwärmt und zum Ankerkopf 34 mit einem umlaufenden Radialkragen 45 geschmiedet. Beim Umformvorgang bildet der Anschlag 43 ein Gegenlager für die Umformkräfte. Die Behälterwand 17 der Oberschale 7 wird dann form- und kraftschlüssig in der zwischen dem Anschlag 43 und dem Radialkragen 45 gebildeten Ringnut 46 gehalten. Anschließend werden die Ankerköpfe 33, 34 mit der Oberschale 7 und der Unterschale 9 dicht geschweißt.

Falls erforderlich, kann zusätzlich ein Dichtmaterial in der Verbindungszone zwischen den Ankerköpfen 33, 34 und den Behälterwänden 17, 18 integriert werden. Für die Praxis bietet sich die Verwendung einer metallischen Dichtung oder einer Schmelzdichtung an.

Bei dem nicht erfindungsgemässen Gasbehälter 4 gemäß den Figuren 3 und 4 weist das Zugelement 22 einen Zugstab 47 auf, an dessen beiden Enden 31, 32 Ankerköpfe 35, 36 mit einem inneren Anschlag 48 in Form eines umlaufenden Kragens ausgebildet sind. Hieran schließen sich axial in Richtung zu den freien Enden 31, 32 Zapfen 49, 50 an. Ein solches Zugelement 22 ist in vergrößerter Darstellung der Figur 5 zu entnehmen. Diese zeigt das Zugelement 22, bevor die Zapfen 49, 50 zu Ankerköpfen 35, 36 umgeformt werden.

Die beiden Zapfen 49, 50 werden durch die Öffnungen 39, 40 in der Oberschale 8 und der Unterschale 10 hindurchgesteckt. Die Öffnungen 39, 40 sind im Durchmesser gleich groß gestaltet. Anschließend werden die Zapfen 49, 50 erwärmt und in der wie zuvor am Beispiel des Ankerkopfs 34 beschriebenen Weise zu dem Ankerköpfen 35, 36 mit einem umlaufenden Radialkragen 51 geschmiedet. Als Gegenlager bzw. Schmiedegesenk dient der innere Anschlag 48 des Ankerkopfs 35, 36. Zwischen dem inneren Anschlag 48 und dem äußeren Radialkragen 51 bildet sich eine konische Ringnut 52 aus, die den die Öffnungen 39, 40 umschließenden Bereich der Behälterwände 19, 20 form- und kraftschlüssig einschließt. Anschließend werden die Ankerköpfe 35, 36 mit den Behälterwänden 19, 20 dicht geschweißt.

Die Figur 6 zeigt drei mögliche Ausgestaltungen im Fügebereich zwischen Oberschale und Unterschale.

Bei der Ausführungsform gemäß der Figur 6a stoßen die Behälterwände 19, 20 der Oberschale 8 und der Unterschale 10 stumpf aufeinander, wie dies auch in der Figur 4 zu erkennen ist.

Die Figur 6b zeigt eine Oberschale 7', die im Fügebereich um die Stärke der Behälterwand der Unterschale 9' nach innen eingezogen ist. Die Oberschale 7' kann so wie ein Deckel auf die Unterschale 9' gesetzt werden. Anschließend werden die Oberschale 7' und die Unterschale 9' von außen umlaufend verschweißt. Diese Ausführungsform wird für die Praxis als vorteilhaft angesehen.

Schließlich zeigt Figur 6c eine Ausführungsform analog der Darstellung von Figur 2. Hierbei übergreift die Oberschale 7 die Unterschale 9 mit dem umlaufenden Rand 11. Auch hier sind Oberschale 7 und Unterschale 9 umlaufend dicht verschweißt.

Wie im allgemeinen Teil der Beschreibung ausgeführt, kann ein Zugelement unterschiedlich gestaltet sein. Auch eine seilförmige Gestaltung der Zugelemente, die einen Gasbehälter durchsetzen und die Behälterwände gegeneinander verspannen, ist möglich. Die Ankerköpfe eines solchen seilförmigen Zugelements werden durch die Öffnungen in einem Gasbehälter gezogen und das Zugelement verspannt. Anschließend werden die Köpfe mit der Behälterwand verbunden und abgedichtet. Auch hier wird eine Verschweißung als besonders zweckmäßige Fügung angesehen.

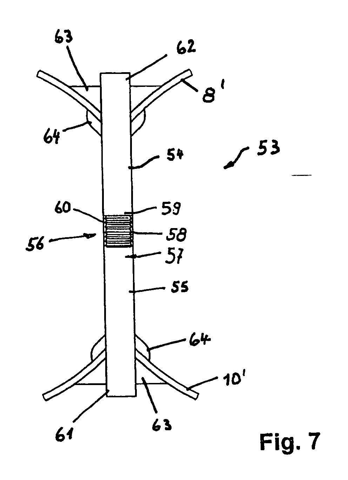

Eine alternative Ausführungsform eines Zugelements 53 zeigt Figur 7 in einer Prinzipdarstellung. Ein solches Zugelement 53 weist zwei miteinander koppelbare Längenabschnitte 54, 55 auf. In dem hier dargestellten Ausführungsbeispiel werden die Längenabschnitte 54, 55 durch eine Gewindeverschraubung 56 gekoppelt. Hierfür weist ein Ende 57 des Längenabschnitts 54 ein Außengewinde 58 auf, wohingegen der Längenabschnitt 55 an einem Ende 59 mit einem entsprechenden Innengewinde 60 versehen ist. Die freien Enden 61, 62 des Zugelements 53 sind mit Formschlusseinlagen 63, 64 versehen, über die das Zugelement 53 mit der Oberschale 8' bzw. der Unterschale 10' gasdicht verbunden und gefügt werden kann.

### Bezugszeichenaufstellung

- 1 -: Druckgastank
- 2 -: Druckgastank
- 3 -: Gasbehälter
- 4 -: Gasbehälter
- 5 -: Anschluß
- 6 -: Anschluß
- 7 -: Oberschale
- 7' -: Oberschale
- 8 -: Oberschale
- 8' -: Oberschale
- 9 -: Unterschale
- 9' -: Unterschale
- 10 -: Unterschale
- 10' -: Unterschale
- 11 -: Rand v. 7
- 12 -: Rand v. 9
- 13 -: Rand v. 8
- 14 -: Rand v. 10
- 15 -: Schweißnaht
- 16 -: Schweißnaht
- 17 -: Behälterwand
- 18 -: Behälterwand
- 19 -: Behälterwand
- 20 -: Behälterwand
- 21 -: Zugelement
- 22 -: Zugelement
- 23 -: Wandabschnitt
- 24 -: Wandabschnitt
- 25 -: Wandabschnitt
- 26 -: Wandabschnitt
- 27 -: Wandabschnitt
- 28 -: Wandabschnitt
- 29 -: Ende v. 21
- 30 -: Ende v. 21
- 31 -: Ende v. 22
- 32 -: Ende v. 22
- 33 -: Ankerkopf
- 34 -: Ankerkopf
- 35 -: Ankerkopf
- 36 -: Ankerkopf
- 37 -: Öffnung
- 38 -: Öffnung
- 39 -: Öffnung
- 40 -: Öffnung
- 41 -: Zugstab
- 42 -: Anschlag
- 43 -: Anschlag
- 44 -: Zapfen
- 45 -: Radialkragen
- 46 -: Ringnut
- 47 -: Zugstab
- 48 -: Anschlag
- 49 -: Zapfen
- 50 -: Zapfen
- 51 -: Radialkragen
- 52 -: Ringnut
- 53 -: Zugelement
- 54 -: Längenabschnitt
- 55 -: Längenabschnitt
- 56 -: Gewindeverschraubung
- 57 -: Ende v. 54
- 58 -: Außengewinde
- 59 -: Ende v. 55
- 60 -: Innengewind
- 61 -: Ende v. 53
- 62 -: Ende v. 53
- 63 -: Formschlusseinlage
- 64 -: Formschlusseinlage

- P -: Profilierung

## Patentansprüche

1. Druckgastank für Kraftfahrzeuge, bei welchem einander gegenüberliegende Behälterwände (17, 18) eines metallischen Gasbehälter (3) eine ihre Steifigkeit erhöhende Profilierung (P) aufweisen und durch wenigstens ein den Gasbehälter (3) durchsetzendes Zugelement (21) verbunden sind, wobei das Zugelement (21) an seinen Enden (29, 30) mit Ankerköpfen (33, 34) versehen ist, die in Öffnungen (37, 38) der Behälterwände (17, 18) gasdicht mit den Behälterwänden (17, 18) gefügt sind, wobei der verdickte Ankerkopf (34) zumindest an einem Ende (30) eines Zugelements (21) einen inneren Anschlag (43) und einen äußeren, durch Umformen eines Zapfens (44) gebildeten Radialkragen (45) aufweist, zwischen denen die Behälterwand (17) in einer Ringnut (46) gehalten ist, **dadurch gekennzeichnet, dass** die in den Behälterwänden (17, 18) einander gegenüberliegenden Öffnungen (37, 38) unterschiedlich groß sind.

2. Druckgastank nach Anspruch 1, bei welchem die Profilierung (P) durch eine Vielzahl von aus der Ebene der Behälterwände (17, 18) geprägten konvex und/oder konkav gestalteten Wandabschnitten (23-28) ausgebildet ist.

3. Druckgastank nach Anspruch 1 oder 2, bei welchem der Gasbehälter (3) aus einer Oberschale (7, 7') und einer Unterschale (9, 9') besteht, welche über ihre umlaufenden Ränder (11, 12) verbunden sind.

4. Druckgastank nach einem der Ansprüche 1 bis 3, bei welchem das Zugelement mit den Behälterwänden unter Eingliederung einer Dichtung gefügt ist.

## Claims

1. Compressed gas tank for motor vehicles, in which opposing container walls (17, 18) of a metallic gas container (3) comprise a profiling (P) increasing the rigidity thereof and are connected by at least one tie element (21) penetrating the gas container (3), the tie element (21) being provided at the ends (29, 30) thereof with anchoring heads (33, 34), which are joined to the container walls (17, 18) in a gastight manner in apertures (37, 38) of the container walls (17, 18), the thickened anchoring head (34) comprising at, at least, one end (30) of a tie element (21) an internal stop (43) and an external radial collar (45) formed by deforming a pin (44), between which the container wall (17) is held in an annular groove (46), **characterized in that** the opposing apertures (37, 38) in the container walls (17, 18) are of different sizes.

2. Compressed gas tank according to Claim 1, in which the profiling (P) is formed by a plurality of wall portions (23-28) designed to be convex and/or concave, stamped from the plane of the container walls (17, 18).

3. Compressed gas tank according to Claim 1 or 2, in which the gas container (3) consists of an upper shell (7, 7') and a lower shell (9, 9') which are connected via the peripheral edges (11, 12) thereof.

4. Compressed gas tank according to one of Claims 1 to 3, in which the tie element is joined to the container walls by incorporating a seal.

## Revendications

1. Réservoir pour gaz sous pression destiné à des véhicules automobiles, dans lequel les parois de récipient (17, 18) opposées entre elles d'un réservoir de gaz métallique (3) présentent un profil (P) augmentant leur rigidité et sont raccordées par au moins un élément de traction (21) traversant le réservoir de gaz (3), l'élément de traction (21) étant muni de têtes d'ancrage (33, 34) sur ses extrémités (29, 30), têtes d'ancrage qui sont ajustées dans des ouvertures (37, 38) des parois de récipient (17, 18) de façon étanche au gaz avec les parois du récipient (17, 18), la tête d'ancrage épaissie (34) présentant au moins sur une extrémité (30) d'un élément de traction (21) une butée intérieure (43) et un collet radial extérieur formé par déformation d'un tourillon (44), entre lesquels la paroi de récipient (17) est maintenue dans une gorge circulaire (46),
**caractérisé en ce que** les ouvertures (37, 38) opposées entre elles dans les parois de récipient (17, 18) sont de grandeurs différentes.

2. Réservoir de gaz sous pression selon la revendication 1, dans lequel le profilage (P) est formé par une pluralité de tronçons de paroi (23-28), configurés de façon prononcée de manière convexe et/ou concave à partir du plan des parois de récipient (17, 18).

3. Réservoir pour gaz sous pression selon la revendication 1 ou 2, dans lequel le récipient de gaz (3) consiste en une coquille supérieure (7, 7') et en une coquille inférieure (9, 9') qui sont raccordées par leurs bords périphériques (11, 12).

4. Réservoir de gaz sous pression selon l'une des revendications 1 à 3, dans lequel l'élément de traction est ajusté avec les parois de récipient avec incorporation d'un élément d'étanchéité.
